# EUROPÄISCHE PATENTSCHRIFT

(11) **EP 0 339 717 B1**
(45) Veröffentlichungstag und Bekanntmachung des Hinweises auf die Patenterteilung: **08.06.1994**
(21) Anmeldenummer: 89200983.8
(22) Anmeldetag: 18.04.1989
(51) Int. Cl.: C25B 11/00, H01M 4/98, H01M 4/88, B22F 7/00

(54) **Verfahren zur Herstellung von Werkstoffverbunden als Blechtafeln, Blechbänder und Folien mit oberflächiger Skelettstruktur und Verwendung der Werkstoffverbunde**
Process for manufacturing composite materials such as sheet-plates, sheet-strips, and foils with superficial skeleton structure and use of the composites
Procédé de fabrication de matériaux composites tels que des plaques, bandes et feuilles de tôles présentant une structure de squelette superficielle et utilisation des composites

(30) Priorität: 23.04.1988 DE 3813744
(43) Veröffentlichungstag der Anmeldung: 02.11.1989
(73) Patentinhaber: METALLGESELLSCHAFT AG, 60015 Frankfurt (DE); KOLBENSCHMIDT Aktiengesellschaft, D-74150 Neckarsulm (DE)
(72) Erfinder: Wüllenweber, Heinz, D-6000 Frankfurt am Main (DE); Kohl, Peter, Dr., D-6451 Neuberg (DE); Bickle, Wolfgang, D-6831 Reilingen (DE); Jung, Herbert, Dr., D-6370 Oberursel (DE); Borchardt, Jürgen, CH-1872 Troistorrents (CH); Braus, Jürgen, Dr., D-6909 Walldorf (DE)
(74) Vertreter: Rieger, Harald, Dr.

(56) Entgegenhaltungen:
- WO-A-83/03105
- DE-A- 2 829 901
- US-A- 3 050 776

## Beschreibung

Die Erfindung betrifft ein Verfahren zur Herstellung von Werkstoffverbunden als Blechtafeln, Blechbänder und Folien mit einer Dicke von ≦ 5 mm, vorzugsweise 0,15 bis 3,0 mm, mit oberflächiger Skelettstruktur mit einer Dicke von 1,0 bis 400 »m, vorzugsweise 5,0 bis 150 »m, in deren offene Poren Raney-Katalysatorwerkstoff eingelagert ist, indem eine Schicht aus einem Gemisch eines schwer rieselfähigen, aus spratzigen Teilchen mit einer Größe von 0,1 bis 10 »m bestehenden, die Skelettstruktur bildenden Metallpulvers, vorzugsweise aus Eisen-, Nickel, Silber- oder Kobaltwerkstoff, und eines pulverförmigen Raney-Katalysatorwerkstoffs auf eine flächenhafte, vorbehandelte, relativ zum Austrag des Pulvers kontinuierlich bewegte metallische Trägerschicht, vorzugsweise aus Eisen-, Kupfer- oder Nickelwerkstoff, aufgetragen, durch Kaltwalzen auf die Trägerschicht, die gleichzeitig um 20 bis 60 % verformt wird, aufplattiert und bei Temperaturen von 600 bis 1000°C, vorzugsweise 700 bis 800°C, und einer Haltezeit von 10 bis 45 min, vorzugsweise 15 min Dauer, in reduzierender Atmosphäre gesintert und die lösliche Komponente des Raney-Katalysatorwerkstoffs herausgelöst wird, sowie die Verwendung der Werkstoffverbunde.

In der AT-PS 206 867 bzw. der DE-PS 12 33 834 ist vorgesehen, auf die Oberfläche eines kompakten oder porösen als Träger dienenden metallischen Formkörpers eine Mischung aus pulverförmigem die Skelettstruktur bildendem Werkstoff und pulverförmiger Raney-Legierung aufzutragen, aufzupressen oder aufzuwalzen, bei Temperaturen oberhalb von 400°C bzw. vorzugsweise oberhalb 600°C in reduzierender Atmosphäre zu sintern und schließlich die lösliche Komponente der Raney-Legierung herauszulösen. Darüber hinaus besteht die Möglichkeit, die Raney-Legierung durch Pressen oder Walzen in die offenen Poren der gesinterten Skelettstruktur einzubringen und bei Temperaturen oberhalb 400°C zu sintern. in bekannter Weise läßt sich aus der Raney-Legierung die lösliche Komponente herauslösen. Bedeutendster Vertreter der Raney-Legierungen ist das Raney-Nickel, das aus einer Nickel-Aluminium-Legierung mit etwa 50 % Nickel hergestellt wird. Eine hochaktive Raney-Nickel-Katalysator-Elektrode enthält neben 90 bis 97 % Nickel etwa 4 bis 8 % Aluminium. Dieses Verfahren ist von Vorteil, wenn die Verfestigung der Mischung auf dem Formkörper durch Aufpressen erfolgt. Bei den anzuwendenden Preß- bzw. Walzdrücken in der Größenordnung von etwa 1 t/cm² ist im Hinblick auf einen vertretbaren technischen Aufwand jedoch nur die Fertigung relativ kleinflächiger Doppel-Skelett-Elektroden möglich. Die Verfestigung der Mischung auf nicht durchbrochenen metallischen Oberflächen, die die Herstellung von großflächigen Doppel-Skelett-Elektroden gestatten würden, ist nur mit Schwierigkeiten durchführbar, weil die Mischung durch den Preß- bzw. Aufwalzvorgang von der metallischen Oberfläche weggeschoben wird mit dem Ergebnis, daß allenfalls extrem dünne und damit bedingt brauchbare Skelettstruktur-Schichten herstellbar sind.

Untersuchungen darüber, ob sich bekannte Verfahren der Pulvermetallurgie oder der Stahlverformung bei der Herstellung von Elektroden mit einer Katalysatorschicht auf der Basis von Raney-Nickel anwenden lassen, haben zu einem Verfahren geführt, bei dem gemäß der EP-PS 0 009 830 auf ein an der Oberfläche aufgerauhtes Ausgangsblech bzw. -band aus Eisen, Stahl, Nickel oder Kupfer eine Mischung eines pulverförmigen, skelettbildenden Werkstoffs und einer pulverförmigen Raney-Legierung im Verhältnis von 1:3 bis 3:1 in Form einer aufstreichbaren Paste in Wasser/Alkoholmischung und einem Bindemittel, wie Stärke, aufgetragen wird. Nach dem Trocknen dieser Schicht wird das Blech bzw. Band durch ein Kaltwalzwerk geführt und die Weite des Walzspalts so eingestellt, daß die Verformung des Blechs bzw. Bands, auf das die Pulvermischung gleichzeitig aufplattiert wird, innerhalb einer Verformungsstufe 20 bis 60 % beträgt. Durch anschließendes kurzzeitiges Glühen von beispielsweise 30-minütiger Dauer bei Temperaturen oberhalb von 600°C in reduzierender Atmosphäre werden die spratzigen Teilchen des skelettbildenden Metallpulvers verschweißt, so daß die potentiellen Katalysator-Körner aus Raney-Legierung in Käfigen aus skelettbildendem Metall festgehalten werden. Die Dicke der Pulverschicht ist so gewählt, daß nach dem Kaltwalzplattieren eine 10 bis 300 »m dicke Skelettstruktur-Schicht resultiert. Dieses Verfahren hat jedoch bisher für die Herstellung von Elektroden mit Doppel-Skelett-Katalysatorschicht nur begrenzt Anwendung gefunden, weil sich danach nur relativ dicke Elektroden, beispielsweise > 2 mm, fertigen lassen, die für eine Reihe von Einsatzfällen, die eine gute Weiterverarbeitbarkeit durch z.B. Prägen, Biegen, Stanzen erfordern, wegen ungleichmäßiger Dicke und nicht ausreichender Haftfestigkeit an der Trägerschicht nicht geeignet sind.

Es ist die Aufgabe der vorliegenden Erfindung, das eingangs beschriebene Verfahren zur Herstellung von Werkstoffverbunden mit oberflächiger Skelettstruktur so zu verbessern, daß die Skelettstruktur eine über die ganze Fläche einheitliche Schichtdicke besitzt, fest an der Trägerschicht haftet und in vergleichsweise großflächigen Abmessungen sowie kleiner Dicke mit möglichst geringem Aufwand herstellbar ist.

Diese Aufgabe wird dadurch gelöst, daß das die Skelettstruktur bildende Pulver gleichmäßig auf die Trägerschicht nach Schüttvolumen zugeteilt und aufgetragen und die Pulverschicht vor dem Kaltwalzplattieren unter einer gegenläufig zur Hauptbewegungsrichtung der Trägerschicht rotierenden Verteilerwalze hindurchgeführt wird, wodurch eine einheitliche Schichtdicke, die die Voraussetzung für die einheitliche Schichtdicke der Skelettstruktur des Werkstoffverbundes und eine ausgezeichnete Haftfestigkeit auf der Trägerschicht bildet, erreicht wird. Darüber hinaus kann beim Kaltwalzen mit einem gleichmäßigen Walzdruck gearbeitet werden.

Als Trägerschicht werden zweckmäßigerweise Blechtafeln oder Blechbänder, die ggf. Durchbrechungen aufweisen, Drahtnetze oder Streckmetalle verwendet, auf die das Pulver in einer solchen Menge aufgetragen wird, daß sich nach dem Durchlauf der Pulverschicht unter der entgegen der Hauptbewegungsrichtung rotierenden Verteilerwalze eine Schichtdicke von 0,25 bis 1,75 mm, vorzugsweise 0,75 bis 1,25 mm, ergibt.

Um das in Sonderfällen auftretende Auseinanderfließen der auf der Trägerschicht befindlichen Pulverschicht beim Transport und/oder Kaltwalzplattieren zu verhindern, wird die Pulverschicht nach einem weiteren Merkmal des erfindungsgemäßen Verfahrens nach dem Durchlauf unter der entgegen der Hauptbewegungsrichtung der Trägerschicht rotierenden Verteilerwalze mit einem Klebelack besprüht und/oder durch Walzen bzw. Pressen leicht vorverdichtet.

Für den Fall, daß die Werkstoffverbunde relativ großen Belastungen ausgesetzt werden sollen, läßt sich die Haftfestigkeit der Skelettstruktur auf der Trägerschicht wesentlich verbessern, indem nach einem weiteren Erfindungsmerkmal vor dem Auftrag des die Skelettstruktur bildenden Pulvers zunächst eine Schicht eines Metallpulvers, vorzugsweise aus Eisen-, Kobalt-, Nickel-, Blei-, Silber- oder Kupferwerkstoff, auf die relativ zum Austrag des Pulvers kontinuierlich bewegte Trägerschicht gleichmäßig nach Schüttvolumen zugeteilt und aufgetragen und anschließend unter einer gegenläufig zur Hauptbewegungsrichtung der Trägerschicht rotierenden Verteilerwalze hindurchgeführt wird. Die dann auf diese Zwischenschicht aufgebrachte, die Skelettstruktur bildende Pulverschicht wird beim Kaltwalzplattieren so tief in diese hineingedrückt, daß zwischen beiden Schichten ein inniger Verbund entsteht.

Nach dem Sintern verhält sich der Werkstoffverbund ähnlich wie ein weichgeglühtes Blech, dessen Härte und Dicke ggf. durch kaltes Nachwalzen in ein oder mehreren Schritten in relativ weiten Grenzen einstellbar sind.

Dicke und Porosität des werkstoffverbundes beeinflussen die elektrische Querleitfähigkeit, d.h. die elektrische Leitfähigkeit parallel zu seiner Oberfläche. Gute Querleitfähigkeit ist von großer Bedeutung bei der Verwendung der Werkstoffverbunde als Elektroden, z.B. in Elektrolyseanlagen, da der elektrische Strom stets über Kontaktpunkte bzw. -linien von der metallischen Struktur der Zellen in die Elektroden fließt und sich in den Elektroden parallel zu deren Oberflächen verteilt. Bei kleinem Abstand der Kontaktpunkte bzw. -linien voneinander und guter Querleitfähigkeit, d.h. kleinem ohmschen Widerstand der Elektroden, geschieht dies ohne nennenswerten Energieverlust. Durch die Wahl der Dichte und Dicke der Skelettstruktur kann der Energieverlust also in relativ weiten Grenzen beeinflußt werden.

Die durch das erfindungsgemäße Verfahren hergestellten Werkstoffverbunde lassen sich problemlos durch Schneiden, Prägen, Biegen, Stanzen oder ähnliche Bearbeitungsvorgänge weiterverarbeiten, da sich die spröde Skelettstruktur, auch wenn diese einreißen sollte, nicht von der Trägerschicht löst.

Für das gleichmäßige, nach dem Schüttvolumen erfolgende Zuteilen und Auftragen des Pulvers auf die Trägerschicht bzw. auf die den Haftgrund bildende Zwischenschicht hat sich die Verwendung eines Zellenradspeisers vor allem bei der Herstellung breiter Werkstoffverbunde als besonders geeignet erwiesen.

Eine vorzugsweise Ausbildung des erfindungsgemäßen Verfahrens ist darin zu sehen, daß auf die Trägerschicht, ggf. auf die den Haftgrund bildende Zwischenschicht, eine Mischung aus die Skelettstruktur bildendem Metallpulver, vorzugsweise Carbonyl-Nickelpulver, und pulverförmiger, als Katalysator wirkender Raney-Legierung im Verhältnis 1:3 bis 3:1 aufgetragen und durch Kaltwalzen aufplattiert wird. Zur katalytischen Aktivierung wird die lösliche Komponente der Raney-Legierung später herausgelöst.

Eine andere Ausführungsform des erfindungsgemäßen Verfahrens besteht darin, daß die Skelettstruktur nach dem Sintern bzw. dem ggf. durchgeführten Nachwalzen mit Katalysatorwerkstoff getränkt wird.

Zur Erhöhung der Haftfestigkeit der Pulverschicht auf der Trägerschicht ist es angebracht, wenn die unter der Verteilerwalze hindurchgeführte Pulverschicht einer weiteren, gegenläufig zur Hauptbewegungsrichtung rotierenden Verteilerwalze zugeführt wird.

Die Erfindung ist in gleicher Weise auch für die Herstellung von Werkstoffverbunden, bestehend aus einer beidseitig mit einer Skelettstruktur beschichteten Trägerschicht, geeignet.

Die nach dem erfindungsgemäßen Verfahren hergestellten Werkstoffverbunde werden vorzugsweise als Elektroden in Elektrolyse- und Brennstoffzellen oder auch als katalytisch wirkende Formkörper, z.B. geprägte Blech-/Wickelkörper, bei chemischen Prozessen verwendet.

Zur kontinuierlichen Herstellung der Werkstoffverbunde kann eine von einer Trommel ablaufende bandförmige Trägerschicht kontinuierlich unter einem oder mehreren Zellenradspeisern hindurchgeführt, unter wenigstens einer gegenläufig zur Hauptbewegungsrichtung rotierenden verteilerwalze und durch ein Plattierwalzenpaar hindurchgeführt und der erzeugte Werkstoffverbund auf eine Trommel aufgewickelt werden.

Die Erfindung ist in der Zeichnung beispielhaft dargestellt und wird nachfolgend näher erläutert.

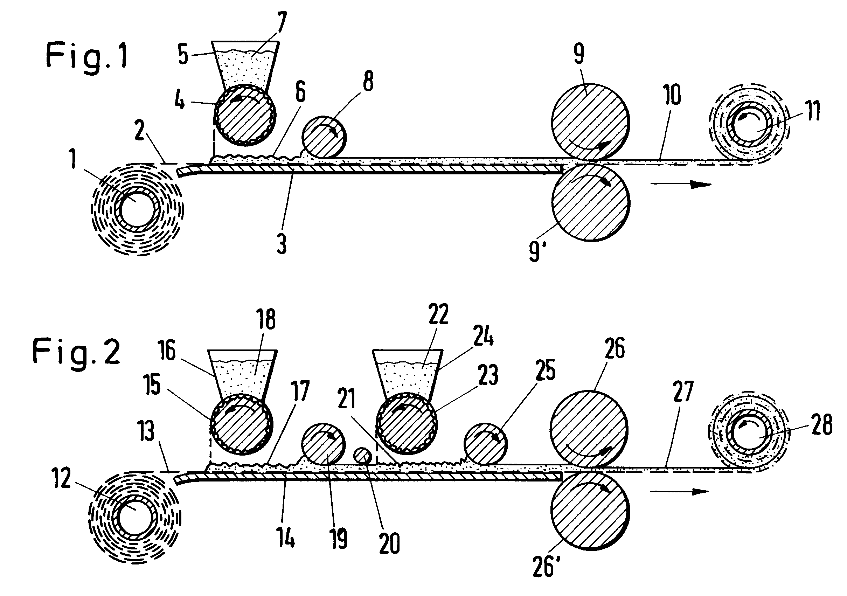

Gemäß Fig. 1 wird auf das gerichtete, entfettete, aufgerauhte und gesäuberte bandförmige, sich von der Trommel (1) abwickelnde, über die ortsfeste Unterlage (3) gezogene Nickelblech (2) von 3 mm Dicke über den Zellenradspeiser (4) aus dem Vorratsbehälter (5) eine Schicht (6) einer Mischung aus stabilisiertem Raney-Nickel-Pulver (7) der Zusammensetzung 42 % Aluminium, 7,5 % Molybdän und 0,5 % Titan, Rest Nickel sowie Carbonyl-Nickel-Pulver gleichmäßig zugeteilt und aufgetragen und anschließend unter der entgegengesetzt der Hauptbewegungsrichtung des Nickelblechs (2) rotierenden Verteilerwalze (8) hindurchgeführt, wobei die Pulverschicht (6) auf eine einheitliche Dicke von 0,9 mm gebracht wird. In dem anschließenden Walzenpaar (9, 9′) wird die Pulverschicht kalt auf das Nickelblech (2) aufplattiert und dabei das Nickelblech (2) selbst um 47,4 % verformt, so daß sich eine Gesamtdicke des Werkstoffverbundes (10) von 2,0 mm ergibt, wobei die Nickel-Skelettstruktur mit darin eingelagertem Raney-Nickel-Katalysator 0,15 mm dick ist. Der Werkstoffverbund (10) wird auf die Trommel (11) aufgewickelt. Der aufgewickelte Werkstoffverbund (10) wird dann unter Schutzgas 15 min lang bei einer Temperatur von ca. 700°C unter reduzierenden Bedingungen geglüht. Die zwischen der Nickel-Skelettstruktur und dem Nickelblech (2) bestehende Haftfestigkeit wurde mit 4 N/mm² gemessen. Zur Aktivierung der Elektrode wird das Aluminium mittels 25 %iger Kalilauge aus der Raney-Nickel-Legierung herausgelöst.

In Fig. 2 wird das bandförmige, eine Dicke von 0,25 mm aufweisende, sich von der Trommel (12) abwickelnde Nickeldrahtnetz (13) mit einer Maschenweite von 0,2 mm und einer Drahtdicke von 0,125 mm kontinuierlich über die ortsfeste Unterlage (14) gezogen und darauf über den Zellenradspeiser (15) aus dem Vorratsbehälter (16) eine Schicht (17) aus Nickelpulver (18) gleichmäßig zugeteilt und aufgetragen. Durch die entgegen der Hauptbewegungsrichtung des Nickelnetzes (13) rotierende Verteilerwalze (19) wird die Nickelpulverschicht (17) auf eine einheitliche Dicke von 0,25 mm gebracht und durch die nachgeordnete Walze (20) leicht vorverdichtet. Auf diese vorverdichtete Nickelpulverschicht (17) wird dann eine Schicht (21) einer Mischung (22) aus 50 % Raney-Nickel-Pulver und 50 % Carbonyl-Nickelpulver mittels des Zellenradspeisers (23) aus dem Vorratsbehälter (24) gleichmäßig zugeteilt und aufgetragen und dann die Pulverschicht (21) unter der entgegen der Hauptbewegungsrichtung rotierenden Verteilerwalze (25) zur Ausbildung einer einheitlichen Schichtdicke von 0,8 mm hindurchgeführt. Anschließend wird die Pulverschicht (21) durch das Walzenpaar (26, 26′) kalt auf das Nickelnetz (13) aufplattiert, so daß sich eine Gesamtdicke des Werkstoffverbundes (27) von 0,5 mm ergibt. Der Werkstoffverbund (27) wird auf die Trommel (28) aufgewickelt. Der Werkstoffverbund (28) wird dann in reduzierender Atmosphäre 15 min lang bei einer Temperatur von 700°C geglüht. Zur Aktivierung der Elektrode wird das Aluminium mittels einer 25 %igen Kalilauge aus der Raney-Nickel-Legierung herausgelöst.

Aus den nach dem erfindungsgemäßen Verfahren hergestellten Werkstoffverbunden lassen sich großflächige Elektroden problemlos mit geringem Aufwand fertigen und verarbeiten. Durch die Verwendung von Profilwalzen oder ähnlich arbeitenden Werkzeugen können die werkstoffverbunde problemlos profiliert und/oder mit Durchbrechungen versehen werden.

## Patentansprüche

1. Verfahren zur Herstellung von Werkstoffverbunden als Blechtafeln, Blechbänder und Folien mit einer Dicke von ≦ 5 mm, vorzugsweise 0,15 bis 3,0 mm, mit oberflächiger Skelettstruktur mit einer Dicke von 1,0 bis 400 »m, vorzugsweise 5,0 bis 150 »m, in deren offene Poren Raney-Katalysatorwerkstoff eingelagert ist, indem eine Schicht aus einem Gemisch eines schwer rieselfähigen, aus spratzigen Teilchen mit einer Größe von 0,1 bis 10 »m bestehenden, die Skelettstruktur bildenden Metallpulvers, vorzugsweise aus Eisen-, Nickel, Silber- oder Kobaltwerkstoff, und eines pulverförmigen Raney-Katalysatorwerkstoffs auf eine flächenhafte, vorbehandelte, relativ zum Austrag des Pulvers kontinuierlich bewegte metallische Trägerschicht, vorzugsweise aus Eisen-, Kupfer- oder Nickelwerkstoff, aufgetragen, durch Kaltwalzen auf die Trägerschicht, die gleichzeitig um 20 bis 60 % verformt wird, aufplattiert und bei Temperaturen von 600 bis 1000°C, vorzugsweise 700 bis 800°C, und einer Haltezeit von 10 bis 45 min, vorzugsweise 15 min Dauer, in reduzierender Atmosphäre gesintert und die lösliche Komponente des Raney-Katalysatorwerkstoffs herausgelöst wird, dadurch gekennzeichnet, daß das Pulver gleichmäßig nach Schüttvolumen zugeteilt und aufgetragen und die Pulverschicht unter einer gegenläufig zur Hauptbewegungsrichtung der Trägerschicht rotierenden Verteilerwalze zur Ausbildung einer einheitlichen Dicke hindurchgeführt wird.

2. Verfahren nach Anspruch 1, dadurch gekennzeichnet, daß als Trägerschicht, ggf. Durchbrechungen aufweisende, Blechtafeln oder Blechbänder, Drahtnetze oder Streckmetalle verwendet werden.

3. Verfahren nach den Ansprüchen 1 und 2, dadurch gekennzeichnet, daß die Pulverschicht nach dem Durchlauf unter der verteilerwalze eine Dicke von 0,25 bis 1,75 mm, vorzugsweise 0,75 bis 1,25 mm, aufweist.

4. Verfahren nach den Ansprüchen 1 bis 3, dadurch gekennzeichnet, daß die Pulverschicht mit einem Klebelack besprüht wird.

5. Verfahren nach einem oder mehreren der Ansprüche 1 bis 4, dadurch gekennzeichnet, daß die Pulverschicht durch Walzen oder Pressen vorverdichtet wird.

6. Verfahren nach einem oder mehreren der Ansprüche 1 bis 5, dadurch gekennzeichnet, daß eine Schicht eines einen Haftgrund bildenden Metallpulvers, vorzugsweise aus Eisen-, Kobalt-, Nickel-, Blei-, Silber- oder Kupferwerkstoff, auf die relativ zum Austrag des Pulvers kontinuierlich bewegte Trägerschicht gleichmäßig nach Schüttvolumen zugeteilt und aufgetragen und unter einer gegenläufig zur Hauptbewegungsrichtung der Trägerschicht rotierenden Verteilerwalze hindurchgeführt wird.

7. Verfahren nach einem oder mehreren der Ansprüche 1 bis 6, dadurch gekennzeichnet, daß der gesinterte Werkstoffverbund kalt nachgewalzt wird.

8. Verfahren nach einem oder mehreren der Ansprüche 1 bis 7, dadurch gekennzeichnet, daß das Pulver mittels Zellenradspeiser zugeteilt und aufgetragen wird.

9. Verfahren nach einem oder mehreren der Ansprüche 1 bis 8, dadurch gekennzeichnet, daß eine Mischung aus die Skelettstruktur bildendem Metallpulver, vorzugsweise Carbonyl-Nickelpulver, und pulverförmiger, als Katalysator dienender Raney-Legierung im Mischungsverhältnis 1:3 bis 3:1 auf die Trägerschicht, die ggf. einen Haftgrund aufweist, aufgetragen wird und aus der zur katalytischen Aktivierung die lösliche Komponente der Raney-Legierung herauslösbar ist.

10. Verfahren nach einem oder mehreren der Ansprüche 1 bis 9, dadurch gekennzeichnet, daß die Skelettstruktur mit Katalysatorwerkstoff getränkt wird.

11. Verfahren nach einem oder mehreren der Ansprüche 1 bis 10, dadurch gekennzeichnet, daß die unter der Verteilerwalze hindurchgeführte Pulverschicht unter einer zusätzlichen, gegenläufig zur Hauptbewegungsrichtung der Trägerschicht rotierenden Verteilerwalze hindurchgeführt wird.

12. Verfahren nach einem oder mehreren der Ansprüche 1 bis 11, dadurch gekennzeichnet, daß die Trägerschicht beidseitig mit einer Skelettstruktur beschichtet wird.

13. Verwendung der nach dem Verfahren gemäß einem oder mehreren der Ansprüche 1 bis 12 hergestellten Werkstoffverbunde als Elektroden in Elektrolyse- und Brennstoffzellen.

14. Verwendung der nach dem Verfahren gemäß einem oder mehreren der Ansprüche 1 bis 12 hergestellten Werkstoffverbunde als katalytisch wirkende Formkörper bei chemischen Prozessen.

## Claims

1. A method for producing composite materials as sheet metal plates, metal strips and foils having a thickness of ≦ 5 mm, preferably 0.15 to 3.0 mm, having a surface skeleton structure having a thickness of 1.0 to 400 »m, preferably 5.0 to 150 »m, in the open pores of which Raney catalyst material is embedded, in that a layer consisting of a mixture of a poorly flowable metal powder consisting of irregular particles of a size of 0.1 to 10 »m which forms the skeleton structure, preferably consisting of iron, nickel, silver or cobalt material, and a powdered Raney catalyst material is applied to an areal, pre-treated metal carrier layer, preferably of iron, copper or nickel material, which is moved continuously relative to the discharge of the powder, is applied by cold-rolling on to the carrier layer which is simultaneously deformed by 20 to 60%, and is sintered at temperatures of 600 to 1000°C, preferably 700 to 800°C, and for a holding time of 10 to 45 minutes, preferably 15 minutes' duration, in a reducing atmosphere and the soluble component of the Raney catalyst material is dissolved out, characterised in that the powder is distributed and applied evenly according to bulk volume and the powder layer is passed through beneath a distributing roller rotating in the opposite direction to the main direction of movement of the carrier layer in order to form a uniform thickness.

2. A method according to Claim 1, characterised in that sheet metal plates or metal strips, wire nets or expanded metals, optionally having apertures, are used as the carrier layer.

3. A method according to claims 1 and 2, characterised in that the powder layer after passing through beneath the distributing roller has a thickness of 0.25 to 1.75 mm, preferably 0.75 to 1.25 mm.

4. A method according to Claims 1 to 3, characterised in that the powder layer is sprayed with an adhesive lacquer.

5. A method according to one or more of Claims 1 to 4, characterised in that the powder layer is precompacted by rolling or pressing.

6. A method according to one or more of Claims 1 to 5, characterised in that a layer of a metal powder forming a primer, preferably of iron, cobalt, nickel, lead, silver or copper material, is distributed and applied evenly according to bulk volume on to the carrier layer which is moved continuously relative to the powder dispensed, and is passed through beneath a distributing roller rotating in the opposite direction to the main direction of movement of the carrier layer.

7. A method according to one or more of Claims 1 to 6, characterised in that the sintered composite material is re-rolled in the cold state.

8. A method according to one or more of Claims 1 to 7, characterised in that the powder is distributed and applied by means of a star wheel feeder.

9. A method according to one or more of Claims 1 to 8, characterised in that a mixture of metal powder forming the skeleton structure, preferably carbonyl-nickel powder, and powdered Raney alloy serving as a catalyst is applied to the carrier layer, which optionally has a primer, in a mixture ratio of 1:3 to 3:1, and out of which the soluble component of the Raney alloy can be dissolved for catalytic activation.

10. A method according to one or more of Claims 1 to 9, characterised in that the skeleton structure is impregnated with catalyst material.

11. A method according to one or more of Claims 1 to 10, characterised in that the powder layer which is passed through beneath the distributing roller is passed through beneath an additional distributing roller rotating in the opposite direction to the main direction of movement of the carrier layer.

12. A method according to one or more of Claims 1 to 11, characterised in that the carrier layer is coated on both sides with a skeleton structure.

13. The use of the composite materials produced in accordance with the method according to one or more of Claims 1 to 12 as electrodes in electrolytic and fuel cells.

14. The use of the composite materials produced in accordance with the method according to one or more of Claims 1 to 12 as catalytically active shaped bodies in chemical processes.

## Revendications

1. Procédé de fabrication de matériaux composites sous forme de feuilles de tôle, des bandes de tôle et de feuilles d'une épaisseur ≦ à 5 mm, de préférence de 0,15 à 3,0 mm, ayant une structure squelette superficielle d'une épaisseur de 1,0 à 400 »m, de préférence de 5,0 à 150 »m, dans les pores ouverts de laquelle est inséré du catalyseur Raney, en plaquant une couche en un mélange d'une poudre métallique, s'écoulant difficilement, en particules irrégulières d'une dimension de 0,1 à 10 »m et formant la structure squelette, de préférence en matériau à base de fer, de nickel, d'argent ou de cobalt et d'un catalyseur Raney pulvérulent déposé sur une couche support métallique, de préférence en matériau à base de fer, de cuivre ou de nickel, s'étendant en surface, prétraitée et déplacée en continu par rapport à l'évacuation de la poudre, par laminage à froid sur la couche support qui est en même temps déformée de 20 à 60% et en la frittant à des températures de 600 à 1000° C, de préférence de 700 à 800°C et pendant une durée de séjour de 10 à 45 minutes, de préférence de 15 minutes en atmospère réductrice, et en extrayant par dissolution les constituants solubles du catalyseur Raney, caractérisé en ce qu'il consiste à répartir la poudre uniformément en fonction du volume apparent et à faire passer la couche de poudre sous un cylindre répartiteur tournant en sens inverse du sens de déplacement principal de la couche support en vue d'obtenir une épaisseur uniforme.

2. Procédé suivant la revendication 1, caractérisé en ce qu'il consiste à utiliser comme couche support des feuilles de tôle ou des bandes de tôle éventuellement perforées, des toiles métalliques ou des métaux déployés.

3. Procédé suivant la revendication 1 ou 2, caractérisé en ce que la couche de poudre a, après être passée sous le cylindre répartiteur, une épaisseur de 0,25 à 1,75 mm, de préférence à 0,75 à 1,25 mm.

4. Procédé suivant l'une des revendications 1 à 3, caractérisé en ce qu'il consiste à pulvériser un vernis adhésif sur la couche de poudre.

5. Procédé suivant l'une ou plusieurs des revendications 1 à 4, caractérisé en ce qu'il consiste à prédensifier la couche de poudre par laminage ou par pressage.

6. Procédé suivant l'une ou plusieurs des revendications 1 à 5, caractérisé en ce qu'il consiste à répartir uniformément suivant le volume apparent et à déposer une couche d'une poudre métallique formant une base d'adhérence, de préférence en matériau à base de fer, de cobalt, de nickel, plomb, d'argent ou de cuivre sur la couche support déplacée en continu par rapport à l'évacuation de la poudre et à la faire passer sous un cylindre répartiteur tournant en sens inverse du sens de déplacement principal de la couche support.

7. Procédé suivant l'une ou plusieurs des revendications 1 à 6, caractérisé en ce qu'il consiste à faire subir un post-laminage à froid au matériau composite fritté.

8. Procédé suivant l'une ou plusieurs des revendications 1 à 7, caractérisé en ce qu'il consiste à répartir et à déposer la poudre au moyen d'un alimentateur à roue cellulaire.

9. Procédé suivant l'une ou plusieurs des revendications 1 à 8, caractérisé en ce qu'il consiste à déposer un mélange de la poudre métallique formant la structure squelette, de préférence de la poudre de nickel carbonyle, et d'alliage Raney pulvérulent servant de catalyseur en le rapport de mélange de 1:3 à 3:1 sur la couche support qui comporte éventuellement une base d'adhérence et à en extraire par dissolution pour l'activation catalytique les constituants solubles de l'alliage Raney.

10. Procédé suivant l'une ou plusieurs des revendications 1 à 9, caractérisé en ce qu'il consiste à imprégner la structure squelette de catalyseur.

11. Procédé suivant l'une ou plusieurs des revendications 1 à 10, caractérisé en ce qu'il consiste à faire passer la couche de poudre passant sous le cylindre répartiteur sous un cylindre répartiteur supplémentaire tournant en sens inverse du sens de déplacement principal de la couche support.

12. Procédé suivant l'une ou plusieurs des revendications 1 à 11, caractérisé en ce qu'il consiste à revêtir la couche support sur les deux faces d'une structure squelette.

13. Utilisation des matériaux composites fabriqués par le procédé suivant l'une ou plusieurs des revendications 1 à 12 comme électrode dans des piles d'électrolyse et dans des piles à combustible.

14. Utilisation des matériaux composites fabriqués suivant l'une ou plusieurs des revendications 1 à 12 comme corps à action catalytique dans des processus chimiques.
